# FASCICULE DE BREVET EUROPEEN

(11) **EP 0 874 876 B1**
(45) Date de publication et mention de la délivrance du brevet: **09.06.1999**
(21) Numéro de dépôt: 96943179.0
(22) Date de dépôt: 23.12.1996
(51) Int. Cl.: C09J 123/20, C09J 123/22

(54) **PATE ADHESIVE SENSIBLE A LA PRESSION**
DRUCKEMPFINDLICHE KLEBSTOFFPASTE
PRESSURE-SENSITIVE ADHESIVE PASTE

(30) Priorité: 19.01.1996 FR 9600600
(43) Date de publication de la demande: 04.11.1998
(73) Titulaire: PLASTO S.A., 21300 Chenôve (FR)
(72) Inventeur: BERNARD, Pascale, 94 370 Sucy-en-Brie (FR); GUILLEMET, Alain, F-21121 Fontaine-lès-Dijon (FR)
(74) Mandataire: Levy, David
(86) Numéro de dépôt international: FR9602063
(87) Numéro de publication internationale: WO9726306

(56) Documents cités:
- EP-A- 0 331 410
- EP-A- 0 518 045
- FR-A- 2 401 662

## Description

La présente invention concerne une nouvelle formulation de pâtes adhésives malléables sensibles à la pression et son application pour la fixation définitive ou provisoire d'objets sur des supports divers ou l'assemblage rapide de pièces constitutives d'un ensemble.

### DOMAINE DE L'INVENTION

La présente invention propose une solution technique appartenant au domaine de la fixation d'objets entre eux ou sur un support au moyen d'un adhésif, ladite fixation ou assemblage étant réversible, c'est-à-dire qu'il est possible de séparer les objets assemblés sans les endommager ou provoquer leur destruction. Ce domaine d'application est différent de celui des colles qui conduisent généralement à un assemblage définitif ou souhaité indestructible par l'utilisateur.

### ART ANTERIEUR

Il est connu d'utiliser des adhésifs pour assembler des objets entre eux, cette méthode étant préférée à l'utilisation de vis ou d'agrafes lorsqu'on souhaite conserver lesdits objets dans leur intégrité. Parmi les solutions techniques connues et largement utilisées, on peut citer :
- les rubans adhésifs à double face, constitués d'un support souple revêtu d'une couche d'adhésif sensible à la pression sur ses deux faces ;
- des pâtes adhésives, présentées sous forme de plaques et que l'on utilise à la manière d'une pâte à modeler ;
- des films de masse adhésive à forte cohésion sensibles à la pression et qui peuvent être décollés par traction sur l'une de leurs extrémités. Ces différents produits présentent cependant des inconvénients.
- les rubans à double face adhésive conviennent bien pour des objets plats fixés sur une surface plane ; l'utilisation de supports en mousse permet d'assembler des surfaces présentant de légers reliefs, mais ceux-ci doivent être très peu prononcés ;
- les pâtes adhésives connues telles que celles commercialisées sous les dénominations "PATAFIX" et "BLUE-TACK" par respectivement les sociétés UHU et BOSTIK, ont un pouvoir adhésif faible et conviennent bien pour fixer des feuilles de papier, comme par exemple des posters ou des affiches ; la fixation d'objets plus lourds ne peut pas être envisagée avec les pâtes adhésives sensibles à la pression connues ;
- les films de masse adhésive à forte cohésion ont une épaisseur constante qui limite leur utilisation à l'assemblage d'objets présentant une surface plane ou des surfaces à courbure superposable ; de plus, la séparation n'est possible que si une extrémité du film reste accessible ; et,
- les autres adhésifs, tels par exemple les colles hot-melt mises en place à l'aide d'un pistolet chauffant, sont essentiellement prévus pour réaliser des fixations définitives, et leur utilisation est réservée à la fixation d'objets non sensibles aux températures élevées.

### OBJET DE L'INVENTION

La présente invention propose une nouvelle formulation de pâtes adhésives malléables sensibles à la pression, lesdites pâtes adhésives permettant de fixer des objets entre eux ou sur un support instantanément et de façon réversible. Selon l'invention, la pâte adhésive est caractérisée en ce qu'elle contient, en plus des agents de cohésion et d'adhésion, une charge à structure lamellaire qui présente l'avantage d'améliorer considérablement la résistance au fluage de la pâte et autorise ainsi la fixation d'objets plus lourds que ce qui était possible auparavant avec les pâtes adhésives connues.

### DESCRIPTION DETAILLEE

Selon l'invention, on propose une nouvelle formulation de pâte adhésive malléable , sensible à la pression, caractérisée en ce qu'elle contient :
a) au moins un agent de cohésion et d'adhésion à base de polyisobutylène et/ou de polybutène ;
b) au moins une résine tackifiante à base de polyterpènes et/ou d'hydrocarbures;
c) au moins une charge à structure lamellaire ;
d) éventuellement un agent plastifiant polaire ; et,
e) éventuellement un additif choisi parmi les agents de protection contre l'oxydation et la lumière, les agents de coloration, les fragrances et leurs mélanges.

Selon l'invention, la formulation de la pâte adhésive malléable , sensible à la pression, est caractérisée en ce qu'elle comprend, pour une teneur totale de 100 % en poids :
a) de 15 à 50 % en poids d'un agent de cohésion et d'adhésion à base de polyisobutylène et/ou de polybutène,
b) de 1 à 12 % en poids de résine tackifiante à base de polyterpène et/ou d'hydrocarbures,
c) de 40 à 70 % en poids de charge à structure lamellaire ;
d) de 0 à 11 % en poids d'un plastifiant polaire ; et,
e) de 0,2 à 6 % en poids d'un additif choisi parmi l'ensemble constitué par les antioxydants, les anti-UV, les colorants, les parfums et leurs mélanges.

Les agents de cohésion et d'adhésion préférés sont des polyisobutylènes, des polybutènes ou des mélanges de ces polymères. Avantageusement, on utilisera des mélanges contenant (i) 15 à 70 % d'un polyisobutylène de masse molaire moyenne comprise entre 350 000 et 450 000, et (ii) 30 à 85 % d'un polybutène de masse molaire moyenne comprise entre 900 et 1000 (ce qui correspond sensiblement à une teneur de 5 à 25 % en polyisobutylène et 12 à 25 % en polybutène pour la formulation de la pâte adhésive). A titre d'exemple de produits commercialisés convenant à cette utilisation, on peut citer le polyisobutylène OPPANOL® B50 de la société BASF (qui présente une masse molaire relative moyenne de 400 000) et le polybutène NAPVIS® 10 de la société BP CHEMICALS (qui présente une masse molaire relative moyenne de 920).

La résine tackifiante est de préférence une résine de synthèse à base (i) de polyterpènes, (ii) à base de fractions en C5, telles les pipérylènes, ou (iii) de mélange de ces composés. Parmi ces types de résines, on préfère celles qui ont un point de ramollissement inférieur à 30°C comme par exemple le produit WINGTACK® 10, commercialisé par la société GOODYEAR.

Les plastifiants sont essentiellement de nature polaire ; on préfère notamment des polypropylèneglycols de masse molaire moyenne d'environ 4000, comme par exemple le produit PLURIOL® P4000, commercialisé par la société BASF.

Les agents de protection sont des produits antioxydants ou anti-UV couramment utilisés dans la formulation des adhésifs et des polymères. On peut utiliser par exemple les produits antioxydants IRGANOX® 1010 (i.e. tétrakis[3-(3,5-di-t-butyl-4-hydroxyphényl)propionate] de pentaerythritol, commercialisé par la société CIBA-GEIGY) et PERKACIT® ZDBC (dibutyldithiocarbamate de zinc, commercialisé par la société AKZO) ou anti-UV TINUVIN® 326 commercialisé par la société CIBA-GEIGY.

Parmi les charges à structure lamellaire utilisables pour réaliser l'invention, on utilise les charges minérales comme par exemple le talc, le kaolin, le mica ou certains silicates ou alumino-silicates, tels que certaines bentonites. Les charges préférées sont le kaolin, le talc et le mica et il est possible de les utiliser pures ou en mélange. D'une façon générale, pour convenir à une utilisation dans la fabrication des pâtes adhésives selon l'invention, ces charges doivent être broyées finement et présenter de préférence une granulométrie moyenne de l'ordre de 1 à 15 µm.

Conformément aux composés sélectionnés particulièrement et décrits ci-dessus, on préfère plus particulièrement les pâtes adhésives malléables , sensibles à la pression, comprenant pour une teneur totale de 100 % en poids :
a₁) 5 à 25 % en poids d'un polyisobutylène de masse molaire moyenne comprise entre 350 000 et 450 000 ;
a₂) 12 à 25 % en poids d'un polybutène de masse molaire moyenne comprise entre 900 et 1000 ;
b) 1 à 12 % en poids d'une résine à base de polyterpènes et de pipérylènes ;
c) 40 à 70 % en poids d'une charge à structure lamellaire choisie parmi le talc, le kaolin et le mica et ayant une granulométrie moyenne comprise entre 1 et 15 µm ;
d) 0 à 11 % en poids d'un polypropylèneglycol de masse molaire moyenne d'environ 4000 ; et,
e) 0,2 à 6 % en poids d'un agent de protection du type antioxydant, et/ou du type anti-UV.

Les pâtes adhésives malléables formulées selon l'invention ont un excellent pouvoir adhésif et sont utiles dans le domaine du bricolage ou dans l'utilisation quotidienne pour fixer des objets entre eux ou sur les murs de façon réversible et non destructrice (c'est-à-dire de façon repositionnable). L'utilisation d'une charge à structure lamellaire permet d'obtenir des pâtes adhésives qui sont facilement malléables et qui conservent cependant un bon pouvoir adhésif et une bonne résistance au fluage. On peut ainsi fixer des objets relativement lourds de façon réversible et sans endommager le support ou l'objet. Après utilisation, les pâtes adhésives conservent leur malléabilité et leur pouvoir adhésif et sont réutilisables.

A titre d'exemple on a réalisé la formulation suivante.

### EXEMPLE 1

On mélange dans un malaxeur à bras en Z, à 80°C :
- 8,50 kg d'OPPANOL® B50 (soit 10,65 parts) préalablement préchauffé à 120°C pendant 2 heures,
- 10 kg de NAPVIS® 10
- 1,04 kg (soit 1,3 part) d'IRGANOX® 1010
- 1,04 kg (soit 1,3 part) de PERKACIT® ZDBC,
et on ajoute progressivement 13,2 kg de talc de granulométrie moyenne comprise entre 1 et 2 µm (réf. P3, fourni par SPCI). Après 10 min de malaxage, on ajoute 3,04 kg (soit 3,8 parts) de résine WINGTACK® 10 et 160 g de colorant.

Le mélange résultant est malaxé pendant 0,5 h à 80°C, puis on ajoute successivement, en malaxant 25 à 30 min entre chaque addition :
- 10 kg de talc P3 (par additions successives),
- 3 kg de NAPVIS® 10,
- 10 kg de talc P3,
- 4,96 kg de NAPVIS® 10 (soit au total 22,45 parts),
- 5,12 kg de PLURIOL® P4000 (soit 6,40 parts), et
- 10 kg de talc P3 (soit au total 54,1 parts).

Le mélange résultant (100 parts en poids) est malaxé pendant encore 20 min après la dernière addition et le produit, ainsi obtenu, est transféré dans une extrudeuse, pour être transformé en un ruban de 250 mm de largeur et 6 mm d'épaisseur environ, placé entre deux protecteurs siliconés (feuilles de papier siliconé, par exemple). Après refroidissement, le produit est découpé en pavés de dimensions adaptées à l'utilisation, au moyen d'emporte-pièces, et conditionné.

En opérant selon un procédé de fabrication analogue, on a également préparé les formulations des exemples 2-9. Les proportions pondérales des divers ingrédients des exemples 1-9 figurent dans le tableau I ci-après.

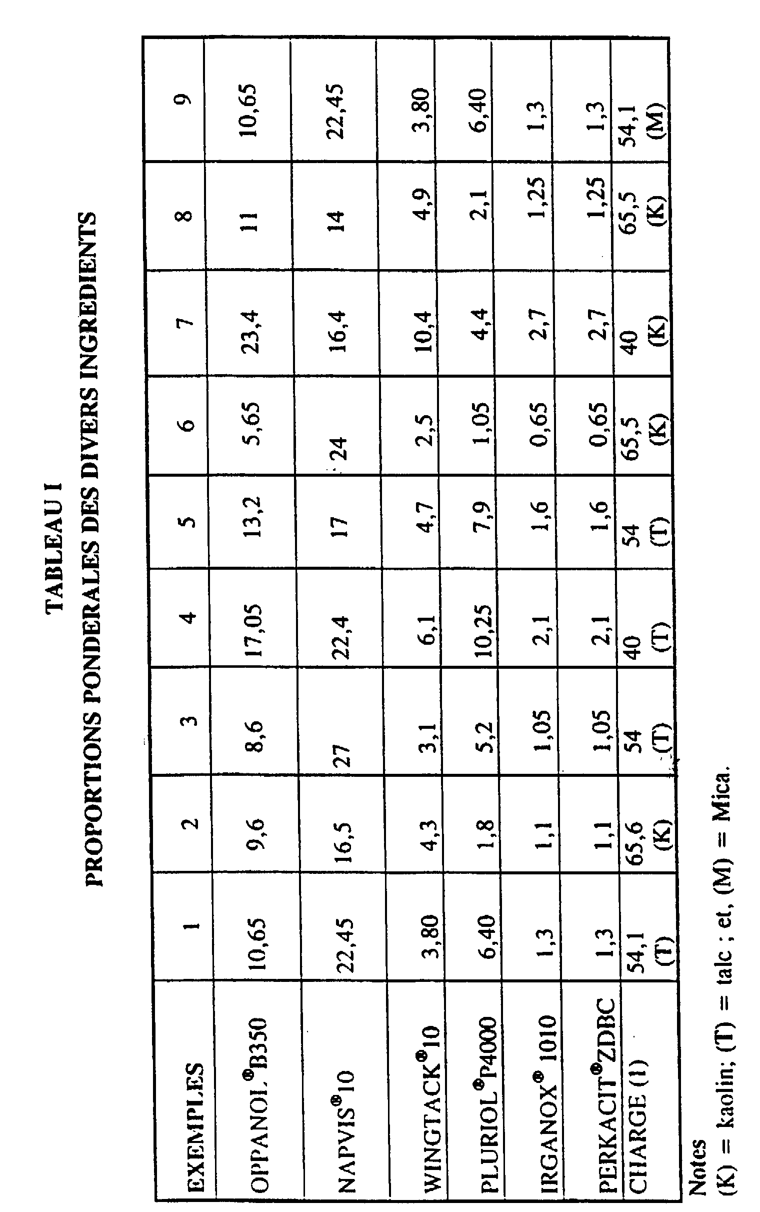

A titre de comparaison, on a réalisé des formulations de même type contenant une charge à structure sphérique, comme par exemple du carbonate de calcium ou une charge à structure aciculaire, comme par exemple de la wollastonite, en remplacement de la charge à structure lamellaire.

Les différentes pâtes adhésives malléables ont été testées pour évaluer leur aptitude à fixer des objets sur un support. Dans cet objectif, on a effectué un test à partir des pastilles de produit, en forme de carré de 10 mm de côté et 6 mm d'épaisseur que l'on presse pour obtenir une épaisseur résiduelle déterminée (e) entre deux plaques d'aluminium. Les plaquettes sont ensuite soumises à une charge qui est augmentée progressivement jusqu'au décrochage de l'adhésif (la charge est en g).

Le tableau II regroupe les résultats obtenus selon ces tests avec des produits de formulation préférée de l'invention. Les exemples comparatifs notés A et B sont de formulation analogue à l'exemple 1 exception faite de la nature de la charge, le talc ayant été remplacé par du carbonate de calcium dont la structure est sphérique pour l'exemple A et par la wollastonite dont la structure est en aiguille pour l'exemple B (les exemples A et B ne sont pas compris dans l'invention). Les valeurs indiquées correspondent à la charge (exprimée en g) provoquant le décollage de l'adhésif.

**TABLEAU II**

| **RESISTANCE AU PELAGE (CHARGE EXPRIMEE EN G)** | | | | |
|---|---|---|---|---|
| **EXEMPLES** | **Epaisseur e** | | | |
| | 4 mm | 3 mm | 2 mm | 1 mm |
| 1 | 55 | 150 | 200 | 350 |
| 2 | 450 | 600 | 1100 | 2000 |
| 9 | 55 | 100 | 100 | 300 |
| A | 50 | 55 | 55 | 100 |
| B | 50 | 55 | 55 | 100 |

Les résultats obtenus selon ce test sont significatifs de l'importance de la nature de la charge : pour une formulation identique, le choix d'une charge à structure lamellaire permet d'obtenir des valeurs jusqu'à 3 fois plus importantes que celles obtenues avec une charge de type sphérique ou de type aciculaire. L'exemple 2 selon l'invention, dont la formulation est à base de kaolin et qui contient une proportion plus faible de plastifiant, reste malléable et permet de fixer de façon réversible des objets de poids important.

La malléabilité des pâtes adhésives doit être suffisante pour que celles-ci puissent être malaxées avant mise en place et ainsi s'adapter parfaitement aux formes de l'objet à fixer et du support. La malléabilité des pâtes adhésives selon l'invention a été évaluée par la mesure du module d'élasticité G', à la fréquence angulaire de 10 radians/s à 25°C pour une déformation de 1 % (appareil utilisé : "RDA" II fabriqué par Rhéométrics - USA).

On obtient les valeurs suivantes de G' (exprimées en 104Pa) consignées dans le tableau III ci-après.

**TABLEAU III**

| **MODULE D'ELASTICITE G' (x 10**^{**4**}**Pa)** | | | | | | | | | |
|---|---|---|---|---|---|---|---|---|---|
| EX | 1 | 2 | 3 | 4 | 5 | 6 | 7 | 8 | 9 |
| G' | 16,4 | 98,5 | 9,98 | 8,44 | 12,3 | 50,4 | 11,4 | 45,9 | 16,4 |

Selon l'invention, les pâtes adhésives sont caractérisées par un module d'élasticité G' compris entre 5 x 10⁴Pa et 10⁶Pa (mesure effectuée à la fréquence angulaire de 10 radians/s, à 25°C).

Les pâtes adhésives malléables selon l'invention trouvent leur application dans le domaine de l'utilisation quotidienne ou du bricolage, pour la fixation d'objets légers ou de poids réduit lorsque l'on souhaite une fixation réversible ne détériorant ni l'objet, ni le support. A titre d'exemple, les pâtes adhésives malléables conviennent bien pour fixer temporairement des posters, des affiches, des plans, des objets décoratifs ou fonctionnels (thermomètre, baromètre, chronomètre. etc). Ils sont également utilisables pour fixer des fils électriques et/ou des boîtiers électriques notamment dans les habitations, les navires, les avions ou les automobiles.

## Revendications

1. Pâte adhésive malléable, sensible à la pression, caractérisée en ce qu'elle contient, pour une teneur totale de 100 % en poids :
a) 15 à 50 % en poids d'un agent de cohésion et d'adhésion à base de polyisobutylène et/ou de polybutène ;
b) 1 à 12 % en poids d'une résine tackifiante à base de polyterpènes et/ou d'hydrocarbures ;
c) 40 à 70 % en poids d'une charge à structure lamellaire ;
d) 0 à 11 % en poids d'un agent plastifiant polaire ; et,
e) 0,2 à 6 % en poids d'un additif choisi parmi l'ensemble constitué par les agents de protection contre l'oxydation, les agents anti-UV,
les agents de coloration, les parfums et leurs mélanges.

2. Pâte adhésive malléable, sensible à la pression, selon la revendication 1, caractérisée en ce qu'elle contient, pour une teneur totale de 100 % en poids :
a₁) 5 à 25 % en poids d'un polyisobutylène de masse molaire moyenne comprise entre 350 000 et 450 000 ;
a₂) 12 à 25 % en poids d'un polybutène de masse molaire moyenne comprise entre 900 et 1000 ;
b) 1 à 12 % en poids d'une résine à base de polyterpènes et de pipérylènes ;
c) 40 à 70 % en poids d'une charge à structure lamellaire choisie parmi le talc, le kaolin et le mica et ayant une granulométrie moyenne comprise entre 1 et 15 µm ;
d) 0 à 11 % en poids d'un polypropylèneglycol de masse molaire moyenne d'environ 4000 ; et,
e) 0,2 à 6 % en poids d'un agent de protection du type antioxydant et/ou du type anti-UV.

3. Pâte adhésive selon l'une des revendications 1 et 2, caractérisée en ce que son module d'élasticité G' à 25°C et sous une fréquence angulaire de 10 radians/seconde est compris entre 5 x 10⁴Pa et 10⁶Pa.

4. Pâte adhésive selon l'une quelconque des revendications 1 et 2. caractérisée en ce que la charge à structure lamellaire est du talc.

5. Pâte adhésive selon l'une quelconque des revendications 1 et 2, caractérisée en ce que la charge à structure lamellaire est du kaolin.

6. Pâte adhésive selon l'une quelconque des revendications 1 et 2, caractérisée en ce que la charge à structure lamellaire est du mica.

7. Pâte adhésive selon la revendication 1, caractérisée en ce que la granulométrie moyenne de la charge à structure lamellaire est comprise entre 1 et 15 µm.

8. Utilisation d'une pâte adhésive selon l'une quelconque des revendications 1 à 7 pour fixer temporairement des objets entre eux ou sur un support.

## Patentansprüche

1. Formbare, druckempfindliche Klebstoffpaste, dadurch gekennzeichnet, daß sie, bezogen auf einen Gesamtgehalt von 100 Gew.-%, enthält:
a) 15 bis 50 Gew.-% eines Kohäsions- und Haftmittels auf der Grundlage von Polyisobutylen und/oder Polybuten;
b) 1 bis 12 Gew.-% eines klebrigmachenden Harzes auf der Grundlage von Polyterpenen und/oder Kohlenwasserstoffen;
c) 40 bis 70 Gew.-% eines Füllmittels mit Schichtstruktur;
d) 0 bis 11 Gew.-% eines polaren Weichmachers und
e) 0,2 bis 6 Gew.-% eines Additivs, ausgewählt aus der Gruppe bestehend aus Oxidationsschutzmitteln, UV-Schutzmitteln, farbgebenden Mitteln, Duftstoffen und deren Mischungen.

2. Formbare, druckempfindliche Klebstoffpaste nach Anspruch 1, dadurch gekennzeichnet, daß sie, bezogen auf einen Gesamtgehalt von 100 Gew.-%, enthält:
a₁) 5 bis 25 Gew.-% eines Polyisobutylens mit einer mittleren Molmasse zwischen 350 000 und 450 000;
a₂) 12 bis 25 Gew.-% eines Polybutens mit einer mittleren Molmasse zwischen 900 und 1000;
b) 1 bis 12 Gew.-% eines Harzes auf der Grundlage von Polyterpenen und Piperylenen;
c) 40 bis 70 Gew.-% eines Füllmittels mit Schichtstruktur, ausgewählt aus Talk, Kaolin und Glimmer und mit einer mittleren Korngröße zwischen 1 und 15 µm;
d) 0 bis 11 Gew.-% eines Polypropylenglycols mit einer mittleren Molmasse von etwa 4000 und
e) 0,2 bis 6 Gew.-% eines Oxidationsschutz- und/oder UV-Schutzmittels.

3. Klebstoffpaste nach einem der Ansprüche 1 und 2, dadurch gekennzeichnet, daß ihr Elastizitätsmodul G' bei 25 °C und bei einer Kreisfrequenz von 10 rad/s zwischen 5 x 10⁴ Pa und 10⁶ Pa liegt.

4. Klebstoffpaste nach einem der Ansprüche 1 und 2, dadurch gekennzeichnet, daß das Füllmittel mit Schichtstruktur Talk ist.

5. Klebstoffpaste nach einem der Ansprüche 1 und 2, dadurch gekennzeichnet, daß das Füllmittel mit Schichtstruktur Kaolin ist.

6. Klebstoffpaste nach einem der Ansprüche 1 und 2, dadurch gekennzeichnet, daß das Füllmittel mit Schichtstruktur Glimmer ist.

7. Klebstoffpaste nach Anspruch 1, dadurch gekennzeichnet, daß die mittlere Korngröße des Füllmittels mit Schichtstruktur zwischen 1 und 15 µm beträgt.

8. Verwendung einer Klebstoffpaste nach einem der Ansprüche 1 bis 7 zur temporären Bindung von Gegenständen aneinander oder an einen Träger.

## Claims

1. A pressure-sensitive malleable adhesive paste which contains, for a total content of 100% by weight:
a) 15 to 50% by weight of a cohesion and adhesion promoter based on polyisobutylene and/or polybutene;
b) 1 to 12% by weight of a tackifying resin based on polyterpenes and/or hydrocarbons;
c) 40 to 70% by weight of a filler having a lamellar structure;
d) 0 to 11% by weight of a polar plasticizing agent; and
e) 0.2 to 6% by weight of an additive chosen from among the group consisting of agents for protecting against oxidation, UV stabilizers, coloring agents, scents and mixtures thereof.

2. The pressure-sensitive malleable adhesive paste as claimed in claim 1, which contains, for a total content of 100% by weight:
a₁) 5 to 25% by weight of a polyisobutylene having an average molar mass of between 350,000 and 450,000;
a₂) 12 to 25% by weight of a polybutene having an average molar mass of between 900 and 1000;
b) 1 to 12% by weight of a resin based on polyterpenes and piperylenes;
c) 40 to 70% by weight of a filler having a lamellar structure chosen from among talc, kaolin and mica and having an average particle size of between 1 and 15 µm;
d) 0 to 11% by weight of a polypropylene glycol having an average molar mass of approximately 4000; and
e) 0.2 to 6% by weight of a protective agent of the antioxidant type and/or of the UV stabilizer type.

3. The adhesive paste as claimed in either of claims 1 and 2, wherein its elastic modulus G' at 25°C and at an angular frequency of 10 radians/second is between 5 × 10⁴ Pa and 10⁶ Pa.

4. The adhesive paste as claimed in either of claims 1 and 2, wherein the filler having a lamellar structure is talc.

5. The adhesive paste as claimed in either of claims 1 and 2, wherein the filler having a lamellar structure is kaolin.

6. The adhesive paste as claimed in either of claims 1 and 2, wherein the filler having a lamellar structure is mica.

7. The adhesive paste as claimed in claim 1, wherein the average particle size of the filler having a lamellar structure is between 1 and 15 µm.

8. The use of an adhesive paste as claimed in any one of claims 1 to 7 for temporarily fastening objects to each other or to a support.
